# EUROPÄISCHE PATENTSCHRIFT

(11) **EP 1 642 005 B1**
(45) Veröffentlichungstag und Bekanntmachung des Hinweises auf die Patenterteilung: **14.10.2009**
(21) Anmeldenummer: 04740068.4
(22) Anmeldetag: 18.06.2004
(51) Int. Cl.: F01D 5/14

(54) **TURBINENSCHAUFEL**
TURBINE BLADE
AUBE DE TURBINE

(30) Priorität: 09.07.2003 EP 03015496
(43) Veröffentlichungstag der Anmeldung: 05.04.2006
(73) Patentinhaber: SIEMENS AKTIENGESELLSCHAFT, 80333 München (DE)
(72) Erfinder: BORTHWICK, Donald, Tyne and Wear NE9 6XZ (GB); CHEN, Shun, Winter Springs, FL 32708 (US); STÜER, Heinrich, 45721 Haltern (DE); TRUCKENMÜLLER, Frank, 45468 Mülheim a.d. Ruhr (DE)
(86) Internationale Anmeldenummer: PCT/EP2004/006624
(87) Internationale Veröffentlichungsnummer: WO 2005/005784

(56) Entgegenhaltungen:
- WO-A-02/055845
- FR-A- 2 784 421
- US-A- 2 738 950
- US-A- 3 745 629
- US-A- 4 714 407
- US-A1- 2003 031 564
- US-A1- 2004 091 353
- US-B1- 6 341 942

## Beschreibung

Die Erfindung betrifft eine Turbinenschaufel, die eine Schaufelhöhe, ein rotorseitiges und ein statorseitiges Ende, eine An- und Abströmkante und eine Saug- und Druckseite aufweist und zur Anwendung relativ zu einer allgemeinen Strömungsrichtung ausgebildet ist, sowie eine Strömungsmaschine, die mit einer solchen Turbinenschaufel ausgestattet ist.

Zum Beispiel im Dampfturbinenbau werden gekrümmte Leitschaufeln als Ausführungsform von Turbinenschaufeln insbesondere dann eingesetzt, wenn starke dreidimensionale Strömungen auftreten, die ausgeprägte radiale Unterschiede im statischen Druckverlauf zwischen der Rotorseite und Statorseite zeigen, die durch die Umlenkung in den Leitschaufeln entstehen. Das Schaufellängen zu Nabenverhältnis ist bei Dampfturbinen, insbesondere bei Niederdruck-Turbinen mit einem großen Abströmquerschnitt, verhältnismäßig groß. Die Strömung eines Strömungsmediums in der letzten Stufe einer Niederdruck-Turbine mit großem Anströmquerschnitt führt bei einem großen Schaufellängen zum Nabenverhältnis zu einer sich auf den Wirkungsgrad der Dampfturbine negativ auswirkenden radialen Reaktionsverteilung. Die Reaktionsverteilung ist hierbei in radialer Richtung unterschiedlich und an der Nabe niedrig und am Gehäuse hoch, was als nachteilig empfunden wird.

Als Isentroper-Reaktionsgrad r wird bei einer thermischen Strömungsmaschine die prozentuale Aufteilung des isentropen Enthalpiegefälles in Laufschaufeln zu dem gesamten isentropen Enthalpiegefälle über eine Stufe, bestehend aus Leitschaufelkranz und Laufschaufelkranz, bezeichnet. Als reine Gleichdruckstufe wird eine solche Stufe bezeichnet, in der der Reaktionsgrad r=0 beträgt und das größte Enthalpiegefälle entsteht. Bei einer klassischen Überdruckstufe beträgt der Reaktionsgrad r=0,5, so dass das Enthalpiegefälle in den Leitschaufeln genauso groß ist wie in den Laufschaufeln. Unter starker Reaktion wird ein Reaktionsgrad von r=0,75 bezeichnet. In der Praxis des Dampfturbinenbaus werden überwiegend die klassische Überdruckstufe sowie die Gleichdruckstufe angewendet. Letztere aber in der Regel mit einem etwas von Null verschiedenen Reaktionsgrad.

Eine niedrige oder gar negative Reaktion an der Nabe führt zu starken Beeinträchtigungen und zu Wirkungsgradeinbußen der Turbine während des Betriebes. Eine hohe Reaktion am Gehäuse ruft eine hohe Anströmgeschwindigkeit der Laufschaufeln im Spitzenbereich hervor. Die hohe Anströmgeschwindigkeit wirkt sich negativ auf den Wirkungsgrad aus, da sich Strömungsverluste quadratisch proportional zur Geschwindigkeit verhalten. Eine Reduktion der Reaktion würde hier Abhilfe schaffen. Zudem würde eine geringere Reaktion am Gehäuse zu einer Verringerung der Spaltverluste führen und dadurch würde der Wirkungsgrad zusätzlich verbessert werden.

Eine hohe Reaktion im Nabenbereich verringert die Spaltverluste im Leitschaufelkranz und führt somit zu einem verbesserten Wirkungsgrad.

Gekrümmte Leitschaufeln werden hierbei insbesondere eingesetzt, um die radiale Reaktionsverteilung zu optimieren.

Es sind Turbinen mit nur in Umfangsrichtung gekrümmten Leitschaufeln beispielsweise aus der DE 37 43 738 bekannt. Dort sind Schaufeln gezeigt und beschrieben, deren Krümmung über der Schaufelhöhe gegen die Druckseite der jeweils in Umfangsrichtung benachbarten Leitschaufel gerichtet ist. Es sind auch aus dieser Schrift Schaufeln bekannt, deren Krümmung über der Schaufelhöhe gegen die Saugseite der jeweils in Umfangsrichtung benachbarten Leitschaufel gerichtet ist. Damit sollen auf wirksame Weise sowohl radiale als auch in Umfangsrichtung verlaufende Grenzschicht-Druckgradienten verringert und damit die aerodynamischen Schaufelverluste verkleinert werden.

Die US 4,714,407 offenbart eine senkrecht zur Strömungsrichtung gebogene Turbinenschaufel und worauf der Oberbegriff des Anspruchs 1 gründet.

In der US 3,745,629 wird eine Turbinenschaufel offenbart, die in Strömungsrichtung gesehen gebogen bzw. mehrfach gebogen ist.

In der US 2,738,950 wird eine Zick-Zack-förmige Turbinenschaufel offenbart, die keine Biegung in Strömungsrichtung gesehen aufweist.

In der US 2003/0031 564 wird eine in Strömungsrichtung gekrümmte Schaufel offenbart.

Turbinen mit in Strömungsrichtung und in Umfangsrichtung gekrümmten Leitschaufeln sind beispielsweise aus der DE 42 28 879 bekannt.

Gekrümmte Leitschaufeln sind auch aus der US-PS 6,099,248 bekannt.

Aufgabe der vorliegenden Erfindung ist es, eine Turbinenschaufel und Strömungsmaschine anzugeben, bei denen der Wirkungsgrad verbessert ist.

Erfindungsgemäß wird dies bei der eingangs beschriebenen Turbinenschaufel mit den kennzeichnenden Merkmalen des Patentanspruchs 1 erreicht.

Der Vorteil der Erfindung ist unter anderem darin zu sehen, dass in Folge der verbesserten Zuströmung die radiale Reaktionsverteilung verbessert ist.

Weitere vorteilhafte Ausgestaltungen sind in den Unteransprüchen beschrieben.

Ausführungsbeispiele der Erfindung werden anhand der Figuren dargestellt. In den Figuren werden funktionsähnliche Komponenten mit denselben Bezugszeichen bezeichnet.

Dabei zeigen
Figur 1 die Seitenansicht einer mit einer Turbinenschaufel ausgestatteten Endstufe einer Strömungsmaschine;
Figur 2 eine Ansicht einer Leitschaufel in Strömungsrichtung eines Strömungsmediums;
Figur 3 eine Schaufel mit Darstellung einer Reaktionsverteilung nach dem Stand der Technik und gemäß der erfindungsgemäßen Turbinenschaufel nach Figur 1;
Figur 4 eine schematische und perspektivische Darstellung der Turbinenschaufel von Figur 1 an einem rotorseitigen Ende;
Figur 5 eine schematische und perspektivische Darstellung der Turbinenschaufel von Figur 1 an einem statorseitigen Ende;
Figur 6 eine perspektivische Ansicht einer Turbinenschaufel.

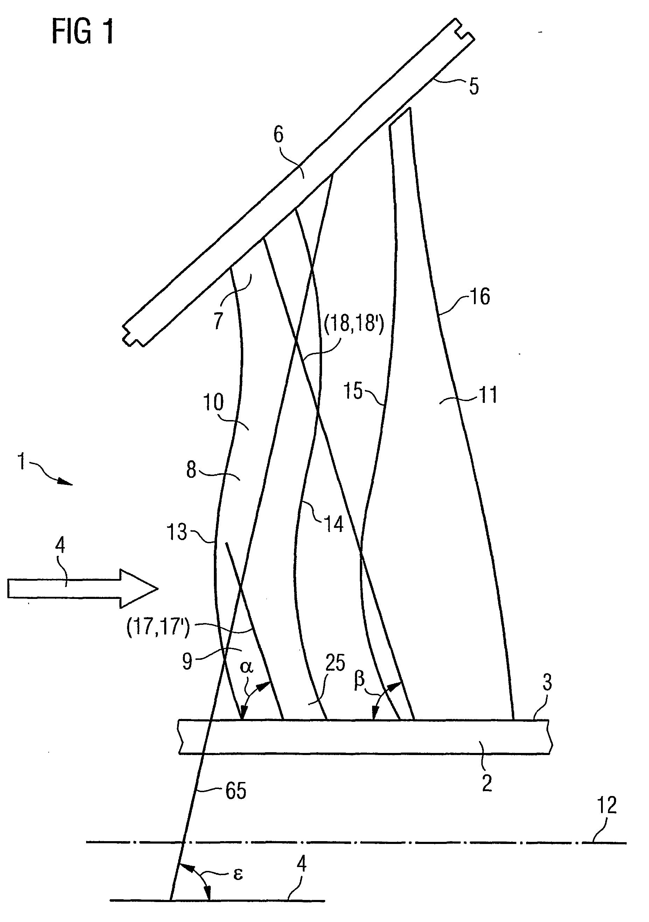

In der in Figur 1 in einer Seitenansicht schematisch gezeigten Dampfturbinenendstufe sind die einen durchströmten Kanal 1 begrenzenden Wandungen zum einen eine rotorseitige Kanalwandung 3 und zum anderen eine statorseitige Kanalwandung 5. Die statorseitige Kanalwandung 5 gehört zu einem Innengehäuse 6. Eine Endstufe besteht aus einer Reihe Leitschaufeln und einer Reihe Laufschaufeln, von denen aus Gründen der Übersichtlichkeit in der Figur 1 jeweils nur eine Leitschaufel 10 und eine Laufschaufel 11 gezeigt wird. Die Leitschaufeln sind auf nicht dargestellte Weise am Innengehäuse 6 befestigt.

Die Laufschaufeln sind auf nicht dargestellte Weise im Rotor 2 befestigt.

Die Leitschaufel 10 weist ein statorseitiges Ende 7, einen mittleren Bereich 8 und ein rotorseitiges Ende 9 auf. Ein Strömungsmedium kann in Strömungsrichtung 4 durch den Kanal 1 strömen. Die Strömungsrichtung 4 ist im Wesentlichen parallel zu einer Rotationsachse 12 des Rotors 2. Die Leitschaufel 10 weist eine über die gesamte Schaufelhöhe ausgebildete Anströmkante 13 und eine Abströmkante 14 auf. Die Laufschaufel 11 weist ebenso eine Anströmkante 15 und eine Abströmkante 16 auf.

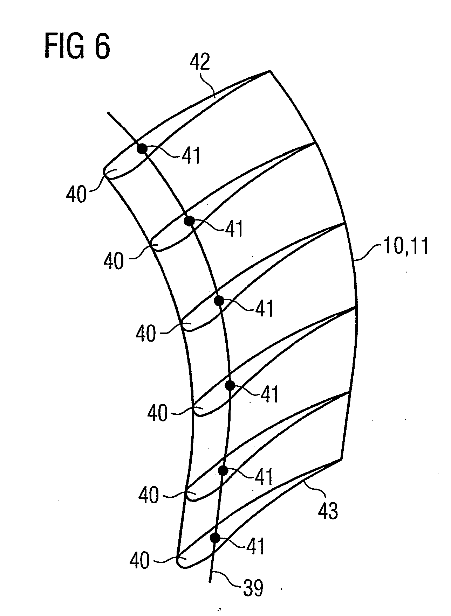

Wie in der Figur 6 dargestellt, wird der Habitus der Turbinenschaufel 10 durch eine Turbinenschaufelformkurve 39 beschrieben. Die Turbinenschaufel 10 wird in Zylinderflächen 40 aufgeteilt. Aus Gründen der Übersichtlichkeit sind in der Figur 6 lediglich sechs Zylinderflächen 40 dargestellt. Die Turbinenschaufelformkurve 39 beschreibt den Habitus genauer, je mehr Zylinderflächen 40 gebildet werden. Zu jeder Zylinderfläche 40 wird deren Massenschwerpunkt 41 ermittelt. Die Turbinenschaufelformkurve 39 wird durch die Verbindung der Massenschwerpunkte 41 von einem Turbinenschaufelfuß 42 zur Turbinenschaufelspitze 43 gebildet.

Wie aus Figur 1 ersichtlich, endet die Turbinenschaufelformkurve 39 jeweils am rotorseitigen Ende 9 und am statorseitigen Ende 7 der Turbinenschaufel 10. Im folgenden beziehen sich die Ausführungen auf eine als Leitschaufel 10 ausgebildete Turbinenschaufel.

Die Turbinenschaufelformkurve 39 wird an ihrem rotorseitigen Ende 9 betrachtet und die dreidimensionale Form der Turbinenschaufelformkurve 39 durch eine Tangente, die als mathematische Ableitung der Turbinenschaufelformkurve 39 in eine Kurvenrichtung zu verstehen ist, abgebildet. Die Tangente bzw. mathematische Ableitung wird am rotorseitigen Ende 9 der Turbinenschaufelformkurve 39 als Hilfstangente 17 bezeichnet. Mit anderen Worten: Die dreidimensionale Form oder der Habitus der Turbinenschaufel 10 am rotorseitigen Ende 9, wird durch die Hilfstangente 17 dargestellt.

Die Leitschaufel 10 ist an ihrem rotorseitigen Ende 9 derart geformt, dass sie in Strömungsrichtung 4 negativ gepfeilt ist. Selbstverständlich ist die Hilfstangente 17 gegenüber der Strömungsrichtung 4 ebenfalls negativ gepfeilt.

Der Habitus des statorseitigen Endes 7 der Leitschaufel 10 wird durch eine zweite Hilfstangente 18 dargestellt. Dabei wird die Turbinenschaufelformkurve 39 an ihrem statorseitigen Ende 7 betrachtet und die dreidimensionale Form der Turbinenschaufelformkurve 39 durch eine Tangente, die als mathematische Ableitung der Turbinenschaufelformkurve 39 in eine Kurvenrichtung zu verstehen ist, abgebildet.

Die Leitschaufel 10 ist an ihrem statorseitigen Ende 7 derart geformt, dass sie in Strömungsrichtung 4 negativ gepfeilt ist. Selbstverständlich ist die Hilfstangente 18 gegenüber der Strömungsrichtung 4 ebenfalls negativ gepfeilt.

Der Habitus der Leitschaufel 10 wird in der Mitte im mittleren Bereich 8 im Wesentlichen durch eine Hilfstangente 65 beschrieben. Dabei wird die Turbinenschaufelformkurve 39 in ihrem mittleren Bereich 8 betrachtet und die dreidimensionale Form der Turbinenschaufelformkurve 39 durch die Hilfstangente 65, die als mathematische Ableitung der Turbinenschaufelformkurve 39 in eine Kurvenrichtung zu verstehen ist, abgebildet. Man geht hierbei von einem im mittleren Bereich 8 liegenden Punkt der Leitschaufelformkurve 39 aus und bildet an diesem Punkt eine als Hilfstangente 65 ausgebildete Tangente oder Ableitung.

Die Leitschaufel 10 ist in ihrem mittleren Bereich 8 derart geformt, dass sie in Strömungsrichtung 4 positiv gepfeilt ist. Selbstverständlich ist die Hilfstangente 65 gegenüber der Strömungsrichtung 4 ebenfalls positiv gepfeilt.

In einer alternativen Ausführungsform kann der mittlere Bereich 8 auch negativ gepfeilt oder sogar senkrecht zur Strömungsrichtung 4 sein.

Negative und positive Pfeilung wird hier folgendermaßen definiert:
Negative Pfeilung: die Strömungsrichtung 4 muss um einen spitzen Winkel in mathematisch negativer Richtung (im Uhrzeigersinn) zur Hilfstangente 17 oder zur Hilfstangente 18 gedreht werden, um ein Zusammenfallen der Strömungsrichtung 4 mit der Hilfstangente 17 oder 18 zu erzielen.

Positive Pfeilung: die Strömungsrichtung 4 muss um einen spitzen Winkel in mathematisch positiver Richtung (gegen den Uhrzeigersinn)zur Hilfstangente 65 gedreht werden, um ein Zusammenfallen der Strömungsrichtung 4 mit der Hilfstangente 65 zu erzielen.

Der Abstand der Abströmkante 14 der Leitschaufel 10 ist am rotorseitigen Ende 9 und im mittleren Bereich 8 konstant zur Anströmkante 15 der benachbarten Laufschaufel 11.

In einer alternativen Ausführungsform kann der Abstand der Abströmkante 14 der Leitschaufel 10 unterschiedlich zur Abströmkante 15 der benachbarten Laufschaufel 11 sein.

Das rotorseitige Ende 9 und das statorseitige Ende 7 liegen in Strömungsrichtung 4 im Wesentlichen übereinander.

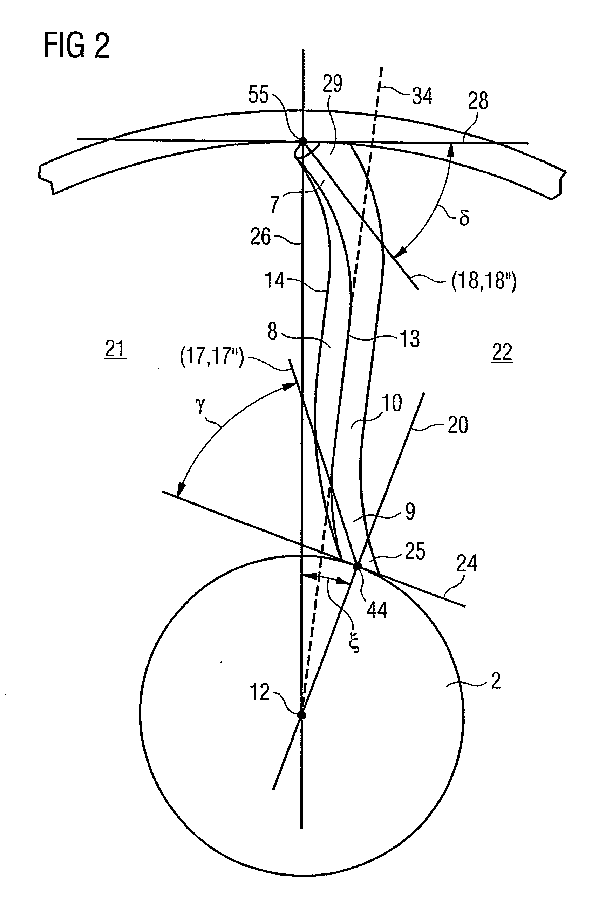

In Figur 2 ist eine Ansicht in Strömungsrichtung 4 dargestellt. Die Leitschaufel 10 liegt zwischen einer Druckseite 21 und einer Saugseite 22. Die in der Figur 2 gezeigte mittlere Linie zwischen der Druckseite 21 und der Saugseite 22 stellt die Anströmkante 13 dar. Die Strömungsrichtung 4 verläuft im Wesentlichen senkrecht zur Zeichenebene. Das Strömungsmedium strömt hierbei entlang der Strömungsrichtung 4 und trifft zuerst auf die Anströmkante 13 der Leitschaufel 10.

Das rotorseitige Ende 9 der Leitschaufel 10 ist in Richtung auf die Druckseite 21 geneigt. Ebenso ist das statorseitige Ende 7 zur Druckseite 21 geneigt.

Im mittleren Bereich 8 der Leitschaufel 10 ist die Leitschaufel 10 zur Saugseite 22 geneigt.

In einer alternativen Ausführungsform kann der mittlere Bereich 8 auch zur Druckseite 21 geneigt sein. In einer weiteren alternativen Ausführungsform kann der mittlere Bereich weder zur Druckseite 21 noch zur Saugseite 22 geneigt sein.

Der mittlere Bereich kann aber auch bei einem alternativen Ausführungsbeispiel der Turbinenschaufel in einer radialen Richtung 34 ausgerichtet sein.

Die Anströmkante 13 ist am rotorseitigen Ende 9 der Leitschaufel 10 im Wesentlichen vor der Abströmkante 14 positioniert.

Am statorseitigen Ende 7 der Leitschaufel 10 ist die Anströmkante 13 in Strömungsrichtung 4 im Wesentlichen vor der Abströmkante 14 positioniert.

Im mittleren Bereich ist die Abströmkante 14 gegenüber der Anströmkante 13 zur Druckseite 21 verschoben.

Das statorseitige Ende 7 der Leitschaufel 10 ist gegenüber dem rotorseitigen Ende 9 in radialer Richtung 34 zur Druckseite 21 hin verschoben.

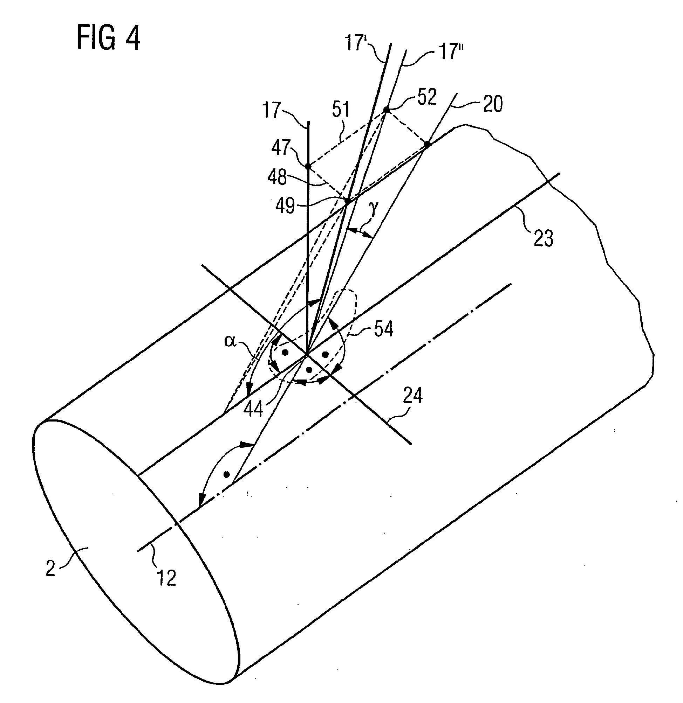

In Figur 4 ist eine schematische und perspektivische Darstellung der Turbinenschaufel 10, 11 am rotorseitigen Ende 9 zu sehen und dient zur näheren Erläuterung der Lagen der Hilfstangente 17 sowie damit im Zusammenhang stehender Winkel α und γ.

Die dreidimensionale Form der Turbinenschaufel 10 wurde aus Gründen der Übersichtlichkeit nicht dargestellt. Die Turbinenschaufel 10 wird am rotorseitigen Ende 9 durch die Hilfstangente 17 dargestellt.

Die Hilfstangente 17 würde, wenn sie in Richtung auf den Rotor 2 verlängert wird, den Rotor 2 in einem Punkt 44 berühren. Eine erste Hilfsachse 20 schneidet die Rotationsachse 12 senkrecht und verläuft durch den Punkt 44.

Eine zweite Hilfsachse 23 schneidet die erste Hilfsachse 20 im Punkt 44 und verläuft im wesentlichen parallel zur Strömungsrichtung 4, die in diesem Ausführungsbeispiel parallel zur Rotationsachse 12 ist.

Eine dritte Hilfsachse 24 schneidet die erste Hilfsachse 20 im Punkt 44 und verläuft senkrecht zur ersten Hilfsachse 20 und senkrecht zur zweiten Hilfsachse 23.

Mit der ersten Hilfsachse 20 und der zweiten Hilfsachse 23 wird eine erste Projektionsebene 45 gebildet. Mit der ersten Hilfsachse 20 und er dritten Hilfsachse 24 wird eine zweite Projektionsebene 46 gebildet.

Die Hilfstangente 17 wird auf die erste Projektionsebene 45 projiziert, indem jeder Punkt der Hilfstangente 17 in Richtung der dritten Hilfsachse 24 auf die erste Projektionsebene 45 projiziert wird.

Beispielhaft wird dies an einem Punkt 47 der Hilfstangente 17 erläutert. Der Punkt 47 wird entlang einer zur dritten Hilfsachse 24 parallel verlaufenden Richtung entlang einer ersten Projektionsgeraden 48 auf einen in der ersten Projektionsebene 45 liegenden ersten Projektionspunkt 49 projiziert. Somit wird auf die erste Projektionsebene 45 eine erste Projektionsgerade 17' projiziert.

Die erste Projektionsgerade 17' ist um einen Winkel α gegenüber der zweiten Hilfsachse 23 geneigt.

Der Winkel α kann hierbei Werte zwischen 0° und 90° annehmen, insbesondere liegt der Wert des Winkels α zwischen 50° und 80°.

Die Hilfstangente 17 wird auch auf die zweite Projektionsebene 46 projiziert, indem jeder Punkt der Hilfstangente 17 in Richtung der zweiten Hilfsachse 23 auf die zweite Projektionsebene 46 bewegt wird, bis diese berührt wird.

Beispielhaft wird dies an dem Punkt 47 der Hilfstangente 17 erläutert. Der Punkt 47 wird entlang einer zur zweiten Hilfsachse 23 parallel verlaufenden Richtung entlang einer zweiten Projektionsgeraden 51 auf einen in der zweiten Projektionsebene 46 liegenden zweiten Projektionspunkt 52 projiziert. Somit wird auf die zweite Projektionsebene 46 eine zweite Projektionsgerade 17'' gebildet.

Die zweite Projektionsgerade 17'' ist um einen Winkel γ gegenüber der ersten Hilfsachse 20 geneigt.

Der Winkel γ kann Werte annehmen, die zwischen 0° und 90° liegen, insbesondere liegt der Winkel γ bei 70°.

Die rotorseitige Endfläche der Turbinenschaufel 10 ist durch einen gestrichelten Verlauf 54 angedeutet.

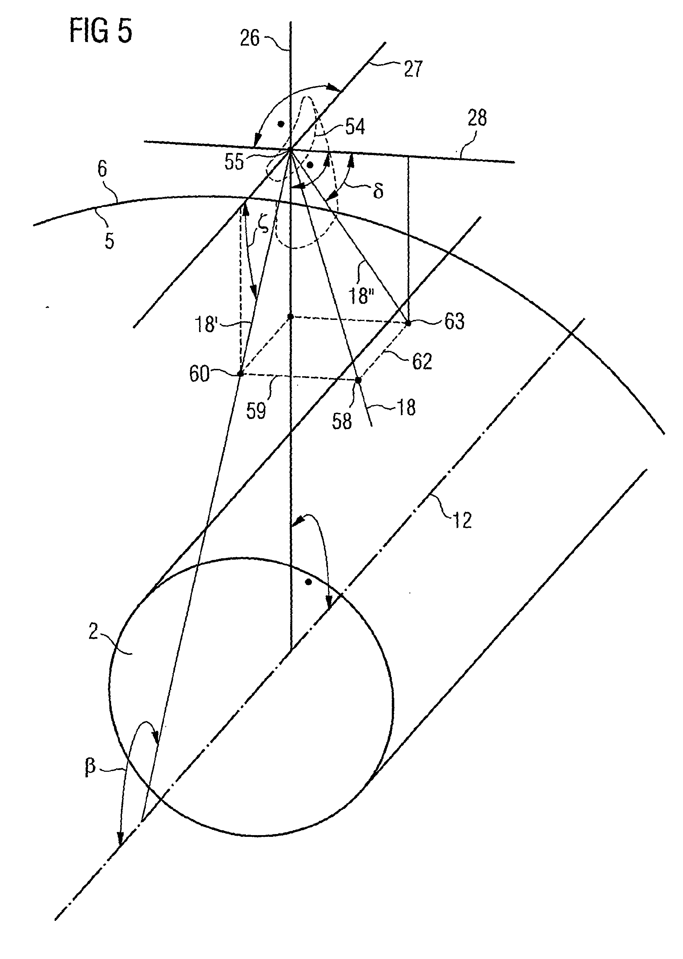

In der Figur 5 ist eine schematische und perspektivische Darstellung der Turbinenschaufel 10 am statorseitigen Ende 7 zu sehen und dient zur näheren Erläuterung der Lagen der Hilfstangente 18 sowie damit in Zusammenhang stehender Winkel β, δ und ξ. Die dreidimensionale Form der Turbinenschaufel 10 wurde aus Gründen der Übersichtlichkeit nicht dargestellt. Die Turbinenschaufel 10 wird am statorseitigen Ende 7 durch die Hilfstangente 18 dargestellt.

Die Hilfstangente 18 würde in ihrer Verlängerung in Richtung Innengehäuse 6 das Innengehäuse 6 in einem Punkt 55 berühren.

Eine vierte Hilfsachse 26 schneidet die Rotationsachse 12 senkrecht und verläuft durch den Punkt 55. Eine fünfte Hilfsachse 27 schneidet die vierte Hilfsachse 26 im Punkt 55 und verläuft parallel zu einer Oberfläche des Innengehäuses am Punkt 55. Eine sechste Hilfsachse 28 schneidet die vierte Hilfsachse 26 senkrecht im Punkt 55 und verläuft senkrecht zur fünften Hilfsachse 27.

Mit der vierten Hilfsachse 26 und der fünften Hilfsachse 27 wird eine dritte Projektionsebene 56 gebildet. Mit der vierten Hilfsachse 26 und der sechsten Hilfsachse 28 wird eine vierte Projektionseben 57 gebildet.

Die Hilfstangente 18 wird auf die dritte Projektionsebene 56 projiziert, indem jeder Punkt der Hilfstangente 18 in Richtung der sechsten Hilfsachse 28 auf die dritte Projektionseben 56 bewegt wird, bis sie diese berührt.

Beispielhaft wird dies mit einem Punkt 58 der Hilfstangente 18 erläutert. Der Punkt 58 wird entlang einer zur sechsten Hilfsachse 28 parallel verlaufenden Richtung entlang einer dritten Projektionsgeraden 59 auf einen in der dritten Projektionsebene 56 liegenden dritten Projektionspunkt 60 projiziert. Somit wird auf die dritte Projektionsebene 56 eine dritte Projektionstangente 18' projiziert.

Die Projektionstangente 18' ist um einen Winkel ξ gegenüber der fünften Hilfsachse 27 geneigt. Der Winkel ξ liegt zwischen 0° und 180°. Die Projektionstangente 18' ist auch um einen Winkel β gegenüber der Rotationsachse 12 geneigt. Der Winkel β kann im Wesentlichen Werte zwischen 0° und 90° annehmen.

Die Hilfstangente 18 wird auch auf die vierte Projektionsebene 57 projiziert, indem jeder Punkt der Hilfstangente 18 in Richtung der fünften Hilfsachse 27 auf die vierte Projektionsebene 57 bewegt wird, bis sie diese berührt.

Beispielhaft wird dies mit dem Punkt 58 der Hilfstangente 18 erläutert. Der Punkt 58 wird entlang einer zur fünften Hilfsachse 27 parallel verlaufenden Richtung entlang einer vierten Projektionsgeraden 62 auf einen in der vierten Projektionsebene 57 liegenden vierten Projektionspunkt 63 projiziert. Somit wird auf die vierte Projektionsebene 57 eine vierte Projektionstangente 18'' projiziert.

Die Projektionstangente 18'' ist um einen Winkel δ gegenüber der sechsten Hilfsachse 28 geneigt. Der Winkel δ liegt zwischen 0° und 90°.

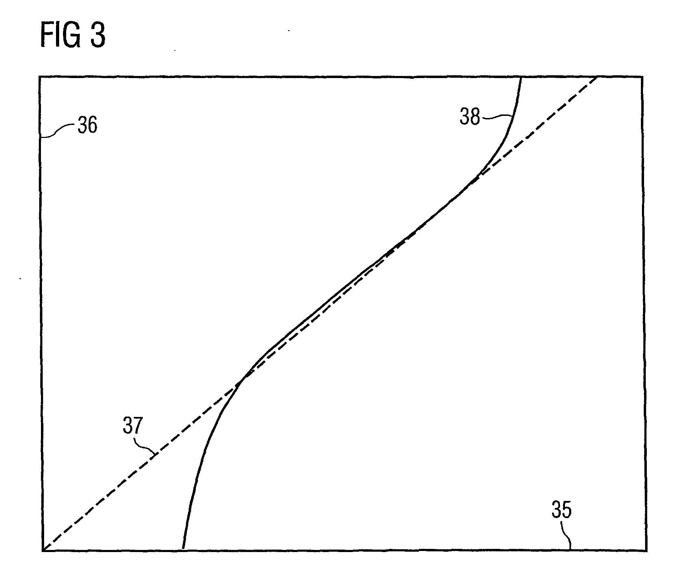

In Figur 3 ist als Diagramm dargestellt eine Reaktionsverteilung in Abhängigkeit einer Schaufelhöhe. Die X-Achse 35 stellt hierbei die Reaktionsverteilung in willkürlichen Einheiten dar. Die Y-Achse 36 stellt hierbei den Abstand zu einer Nabe dar. Die gestrichelte Linie 37 zeigt den Verlauf der Reaktionsverteilung nach dem bisherigen Stand der Technik. Die durchgezogene Linie 38 zeigt den Verlauf der Reaktionsverteilung wenn die Leitschaufeln gemäss der hier dargestellten Erfindung ausgebildet sind.

Wie eingangs erwähnt, ist es ein Nachteil, wenn die Reaktionsverteilung in radialer Richtung 34 unterschiedlich ist. Die gestrichelte Linie 37, die die Reaktionsverteilung nach dem bisherigen Stand der Technik darstellt, zeigt das vorgenannte, als nachteilig empfundene Verhalten. Danach ist die Reaktionsverteilung von der Nabe zum Gehäuse unterschiedlich. Die durchgezogenen Linie 38 zeigt gegenüber der gestrichelte Linie 37 eine verbesserte Reaktionsverteilung.

## Patentansprüche

1. Turbinenschaufel (10, 11), die eine Schaufelhöhe, ein rotorseitiges (9) und ein statorseitiges Ende (7), eine An- (13) und Abströmkante (14) und eine Saug- (22) und Druckseite (23) aufweist und zur Anwendung relativ zu einer allgemeinen Strömungsrichtung (4) ausgebildet ist, wobei die Turbinenschaufel (10, 11) in der Strömungsrichtung (4) an ihrem rotorseitigen Ende (9) und an ihrem statorseitigen Ende (7) negativ gepfeilt ist,
**dadurch gekennzeichnet, dass** die Turbinenschaufel (10, 11) in einer in Bezug auf die Strömungsrichtung (4) radialen Richtung (34) an ihrem rotorseitigen Ende (9) und an ihrem statorseitigen Ende (7) gegen die Druckseite (21) geneigt ist.

2. Turbinenschaufel (10, 11) nach Anspruch 1,
**dadurch gekennzeichnet, dass** die negative Pfeilung des rotorseitigen Endes (9) in eine positive Pfeilung im mittleren Bereich (8) der Turbinenschaufel (10, 11) übergeht und die positive Pfeilung im mittleren Bereich (8) in eine negative Pfeilung am statorseitigen Ende (7) übergeht.

3. Turbinenschaufel (10, 11) nach einem der Ansprüche 1 oder 2,
**dadurch gekennzeichnet, dass**
die Turbinenschaufel (10, 11) in einem mittleren Bereich (8) der Turbinenschaufel (10, 11) zur Saugseite (22) geneigt ist.

4. Turbinenschaufel (10, 11) nach einem der Ansprüche 1 bis 3,
**dadurch gekennzeichnet, dass**
die An- (13) und Abströmkante (14) am statorseitigen Ende (7) im Wesentlichen in Strömungsrichtung (4) hintereinander liegen.

5. Turbinenschaufel (10, 11) nach einem der Ansprüche 1 bis 4,
**dadurch gekennzeichnet, dass**
die An- (13) und Abströmkante (14) am rotorseitigen Ende (9) im Wesentlichen in Strömungsrichtung (4) hintereinander liegen.

6. Turbinenschaufel (10,11) nach einem der Ansprüche 1 bis 5,
**dadurch gekennzeichnet, dass**
die Abströmkante (14) im mittleren Bereich (8) der Schaufelhöhe gegenüber der Anströmkante (13) in Strömungsrichtung zur Druckseite (21)hin verschoben ist.

7. Turbinenschaufel (10, 11) nach einem der Ansprüche 1 bis 6,
**dadurch gekennzeichnet, dass**
das statorseitige Ende (7) gegenüber dem rotorseitigen (9) Ende in radialer Richtung (34) zur Druckseite (21) hin verschoben ist.

8. Turbinenschaufel (10, 11) nach einem der Ansprüche 1 bis 7,
**dadurch gekennzeichnet, dass**
das rotorseitige Ende (9) und das statorseitige Ende (7) in Strömungsrichtung (4) im wesentlichen übereinanderliegt.

9. Turbinenschaufel (10, 11) nach einem der Ansprüche 1 bis 8, die als Leitschaufel (10) ausgebildet ist.

10. Turbinenschaufel (10, 11) nach einem der Ansprüche 1 bis 8, die als Laufschaufel (11) ausgebildet ist.

11. Turbinenschaufel (10, 11) nach einem der Ansprüche 1 bis 10,
**dadurch gekennzeichnet, dass**
das rotorseitige Ende (9) um einen Winkel α zur Strömungsrichtung gepfeilt ist und der Winkel α Werte aufweist, die im wesentlichen zwischen 50° und 80° liegen.

12. Turbinenschaufel (10, 11) nach einem der Ansprüche 1 bis 11,
**dadurch gekennzeichnet, dass**
das statorseitige Ende (7) um einen Winkel β zu einem Innengehäuse (6) gepfeilt ist und der Winkel β Werte aufweist, die im wesentlichen zwischen 0° und 90° liegen.

13. Turbinenschaufel (10, 11)nach einem der Ansprüche 1 bis 12,
**dadurch gekennzeichnet, dass**
das statorseitige Ende (7) um einen Winkel γ zur radialen Richtung (34) geneigt ist und der Winkel γ Werte aufweist, die im wesentlichen zwischen 0° und 90° liegen.

14. Turbinenschaufel (10, 11) nach Anspruch 13,
**dadurch gekennzeichnet, dass**
der Winkel γ im Wesentlichen 70° beträgt.

15. Turbinenschaufel (10, 11) nach einem der Ansprüche 1 bis 14,
**dadurch gekennzeichnet, dass**
das rotorseitige Ende (9) um einen Winkel δ zur radialen Richtung (34) geneigt ist und der Winkel δ Werte aufweist, die im wesentlichen zwischen 0° und 90° liegen.

16. Turbinenschaufel (10, 11) nach Anspruch 15,
**dadurch gekennzeichnet, dass**
der Winkel δ im Wesentlichen 75° beträgt.

17. Strömungsmaschine, die Turbinenschaufeln (10, 11) nach einem der Ansprüche 1 bis 16 aufweist.

18. Strömungsmaschine nach Anspruch 17,
**dadurch gekennzeichnet, dass** die Abströmkante (14) der Leitschaufel (10) am rotorseitigen Ende (9) und im mittleren Bereich (8) einen konstanten Abstand zur Anströmkante (15) einer benachbarten Laufschaufel (11) aufweist.

## Claims

1. Turbine blade (10, 11), which has a blade height, a rotor-side end (9) and a stator-side end (7), a leading edge (13) and trailing edge (14), and a suction side (22) and delivery side (23) and which is designed for use in relation to a general direction of flow (4), the turbine blade (10, 11) having a negative sweep in the direction of flow (4) at its rotor-side end (9) and at its stator-side end (7), **characterized in that** the turbine blade (10, 11) is inclined toward the delivery side (21) at its rotor-side end (9) and at its stator-side end (7) in a radial direction (34) with respect to the direction of flow (4).

2. Turbine blade (10, 11) according to claim 1, **characterized in that** the negative sweep of the rotor-side end (9) merges into a positive sweep in the middle region (8) of the turbine blade (10, 11), and the positive sweep in the middle region (8) merges into a negative sweep at the stator-side end (7).

3. Turbine blade (10, 11) according to either one of Claims 1 and 2, **characterized in that** the turbine blade (10, 11) is inclined toward the suction side (22) in a middle region (8) of the turbine blade (10, 11).

4. Turbine blade (10, 11) according to one of Claims 1 to 3, **characterized in that** the leading edge (13) and trailing edge (14) lie one behind the other essentially in the direction of flow (4) at the stator-side end (7).

5. Turbine blade (10, 11) according to one of Claims 1 to 4, **characterized in that** the leading edge (13) and trailing edge (14) lie one behind the other essentially in the direction of flow (4) at the rotor-side end (9).

6. Turbine blade (10, 11) according to one of Claims 1 to 5, **characterized in that** the trailing edge (14), in the middle region (8) of the blade height, is displaced toward the delivery side (21) in the direction of flow with respect to the leading edge (13).

7. Turbine blade (10, 11) according to one of Claims 1 to 6, **characterized in that** the stator-side end (7) is displaced toward the delivery side (21) in the radial direction (34) with respect to the rotor-side end (9).

8. Turbine blade (10, 11) according to one of Claims 1 to 7, **characterized in that** the rotor-side end (9) and the stator-side end (7) lie essentially one above the other in the direction of flow (4).

9. Turbine blade (10, 11) according to one of Claims 1 to 8, which is designed as a guide blade (10).

10. Turbine blade (10, 11) according to one of Claims 1 to 8, which is designed as a moving blade (11).

11. Turbine blade (10, 11) according to one of Claims 1 to 10, **characterized in that** the rotor-side end (9) is swept at an angle α with respect to the direction of flow, and the angle α has values which lie essentially between 50° and 80°.

12. Turbine blade (10, 11) according to one of Claims 1 to 11, **characterized in that** the stator-side end (7) is swept at an angle β with respect to an inner casing (6), and the angle β has values which lie essentially between 0° and 90°.

13. Turbine blade (10, 11) according to one of Claims 1 to 12, **characterized in that** the stator-side end (7) is inclined at an angle γ with respect to the radial direction (34), and the angle γ has values which lie essentially between 0° and 90°.

14. Turbine blade (10, 11) according to Claim 13, **characterized in that** the angle γ amounts essentially to 70°.

15. Turbine blade (10, 11) according to one of Claims 1 to 14, **characterized in that** the rotor-side end (9) is inclined at an angle δ with respect to the radial direction (34), and the angle δ has values which lie essentially between 0° and 90°.

16. Turbine blade (10, 11) according to Claim 15, **characterized in that** the angle δ amounts essentially to 75°.

17. Turbomachine, which has turbine blades (10, 11) according to one of Claims 1 to 16.

18. Turbomachine according to Claim 17, **characterized in that** the trailing edge (14) of the guide blade (10) is at a constant distance from the leading edge (15) of an adjacent moving blade (11) at the rotor-side end (9) and in the middle region (8).

## Revendications

1. Aube ( 10, 11 ) de turbine qui a une hauteur de turbine, une extrémité ( 9 ) du côté du rotor et une extrémité ( 7 ) du côté du stator, un bord ( 13 ) d'attaque et un bord ( 14 ) de fuite et un extrados ( 22 ) et un intrados ( 23 ) et est constituée un vue d'être utilisée relativement à une direction générale du courant, dans laquelle l'aube ( 10, 11 ) est en flèche négativement dans la direction ( 4 ) du courant à son extrémité ( 9 ) du côté du rotor et à son extrémité ( 7 ) du côté du stator,
**caractérisée en ce que**
l'aube ( 10, 11 ) de turbine est inclinée par rapport à l'intrados ( 21 ) à son extrémité ( 9 ) du côté du rotor et à son extrémité ( 7 ) du côté du stator dans une direction ( 34 ) radiale par rapport à la direction ( 4 ) du courant.

2. Aube ( 10, 11 ) de turbine suivant la revendication 1,
**caractérisée en ce que**
la flèche négative de l'extrémité ( 9 ) du côté du rotor se transforme en une flèche positive dans la partie ( 8 ) médiane de l'aube ( 10, 11 ) de turbine et la flèche positive de la partie ( 8 ) médiane en une flèche négative à l'extrémité ( 7 ) du côté du stator.

3. Aube ( 10, 11 ) de turbine suivant l'une des revendications 1 ou 2,
**caractérisée en ce que**
l'aube ( 10, 11 ) de turbine est inclinée vers l'extrados ( 22 ) dans une partie ( 8 ) médiane de l'aube ( 10, 11 ) de turbine.

4. Aube ( 10, 11 ) de turbine suivant l'une des revendications 1 à 3,
**caractérisée en ce que**
le bord ( 13 ) d'attaque et le bord ( 14 ) de fuite à l'extrémité du côté du stator sont l'un derrière l'autre sensiblement dans la direction ( 4 ) du courant.

5. Aube ( 10, 11 ) de turbine suivant l'une des revendications 1 à 4,
**caractérisée en ce que**
le bord ( 13 ) d'attaque et le bord ( 14 ) de fuite à l'extrémité ( 9 ) du côté du rotor sont l'un derrière l'autre sensiblement dans la direction ( 4 ) du courant.

6. Aube ( 10, 11 ) de turbine suivant l'une des revendications 1 à 5,
**caractérisée en ce que**
le bord ( 14 ) de fuite est décalé vers l'intrados ( 21 ) dans la direction du courant par rapport au bord ( 13 ) d'attaque dans la partie ( 8 ) médiane de la hauteur de l'aube.

7. Aube ( 10, 11 ) de turbine suivant l'une des revendications 1 à 6,
**caractérisée en ce que**
l'extrémité ( 7 ) du côté du stator est décalée vers l'intrados ( 21 ) dans la direction ( 34 ) radiale par rapport à l'extrémité ( 9 ) du côté du rotor.

8. Aube ( 10, 11 ) de turbine suivant l'une des revendications 1 à 7,
**caractérisée en ce que**
l'extrémité ( 9 ) du côté du rotor et l'extrémité ( 7 ) du côté du stator sont sensiblement superposées dans la direction ( 4 ) du courant.

9. Aube ( 10, 11 ) de turbine suivant l'une des revendications 1 à 8, qui est constituée en aube ( 10 ) directrice.

10. Aube ( 10, 11 ) de turbine suivant l'une des revendications 1 à 8 qui est constituée en aube ( 11 ) mobile.

11. Aube ( 10, 11 ) de turbine suivant l'une des revendications 1 à 10,
**caractérisée en ce que**
l'extrémité ( 9 ) du côté du rotor est en flèche d'un angle β par rapport à la direction du courant et l'angle β a des valeurs qui sont sensiblement comprises entre 50° et 80°.

12. Aube ( 10, 11 ) de turbine suivant l'une des revendications 1 à 11,
**caractérisée en ce que**
l'extrémité ( 7 ) du côté du stator est en flèche d'un angle β par rapport à un carter ( 6 ) intérieur et l'angle β a des valeurs qui sont sensiblement comprises entre 0° et 90°.

13. Aube ( 10, 11 ) de turbine suivant l'une des revendications 1 à 12,
**caractérisée en ce que**
l'extrémité ( 7 ) du côté du stator est inclinée d'un angle γ par rapport à la direction ( 34 ) radiale et l'angle γ a des valeurs qui sont sensiblement comprises entre 0° et 90°.

14. Aube ( 10, 11 ) de turbine suivant la revendication 13,
**caractérisée en ce que**
l'angle γ est sensiblement égal à 70°.

15. Aube ( 10, 11 ) de turbine suivant l'une des revendications 1 à 14,
**caractérisée en ce que**
l'extrémité ( 9 ) du côté du rotor est inclinée d'un angle δ par rapport à la direction ( 34 ) radiale et l'angle δ a des valeurs qui sont sensiblement comprises entre 0° et 90°.

16. Aube ( 10, 11 ) de turbine suivant la revendication 15,
**caractérisée en ce que**
l'angle δ est sensiblement égal à 75°.

17. Turbomachine qui a des aubes ( 10, 11 ) de turbine suivant l'une des revendications 1 à 16.

18. Turbomachine qui a des aubes ( 10, 11 ) de turbine suivant l'une des revendications 17,
**caractérisée en ce que**
le bord ( 14 ) de fuite de l'aube ( 10 ) directrice a, à l'extrémité ( 9 ) du côté du rotor et dans la partie ( 8 ) médiane, une distance constante au bord ( 15 ) d'attaque d'une aube ( 11 ) mobile voisine.
